(19) Europäisches Patentamt
European Patent Office
Office européen des brevets

(11) EP 4 672 377 A1

(12) **EUROPEAN PATENT APPLICATION**
published in accordance with Art. 153(4) EPC

(43) Date of publication:
**31.12.2025 Bulletin 2026/01**

(21) Application number: **23924582.2**

(22) Date of filing: **28.02.2023**

(51) International Patent Classification (IPC):
***H01M 4/587*** *(2010.01)*

(52) Cooperative Patent Classification (CPC):
**H01M 10/0525; C01B 32/205; C01B 32/21; H01M 4/1393; H01M 4/587;** C01P 2002/82; C01P 2004/60; C01P 2006/10; C01P 2006/11; C01P 2006/12; C01P 2006/40; C01P 2006/90; Y02E 60/10

(86) International application number:
**PCT/CN2023/078733**

(87) International publication number:
**WO 2024/178610 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited**
**Ningde City, 352100 (CN)**

(72) Inventor: **JIN, Wenbo**
**Ningde, Fujian 352100 (CN)**

(74) Representative: **Icosa**
**83 avenue Denfert-Rochereau**
**75014 Paris (FR)**

# (54) NEGATIVE ELECTRODE ACTIVE MATERIAL, SECONDARY BATTERY, AND ELECTRONIC APPARATUS

(57) A negative electrode active material is provided. The negative electrode active material includes a carbon-based material, where particle surface of the carbon-based material includes an alkali metal element, and the alkali metal element includes element sodium and/or element potassium. In this application, the surface of carbon-based material such as a graphite material is treated to obtain an organic substance layer similar to an SEI film on the particle surface, which can effectively improve the quality of the SEI film, thereby improving the initial coulombic efficiency and cycling performance of the secondary battery. A secondary battery including the negative electrode active material is further provided.

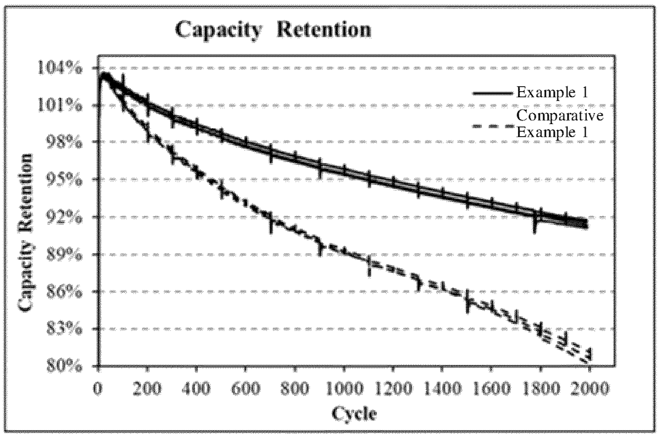


FIG. 1



Processed by Luminess, 75001 PARIS (FR)

## Description

### TECHNICAL FIELD

This application relates to the field of energy storage, and in particular, to a negative electrode active material, a secondary battery, and an electronic apparatus.

### BACKGROUND

With the continuous expansion of the secondary battery market, higher requirements are put forward for the performance of the secondary batteries, and correspondingly higher requirements are put forward for the performance of the negative electrode active materials. The negative electrode active material has obvious influence on the initial coulombic efficiency and cycling performance of the secondary battery, while the initial coulombic efficiency of the secondary battery affects the cost and energy density of the secondary battery, and the cycling performance directly affects the application range of the secondary battery, especially in the fields such as electric vehicles and energy storage where extremely high requirements are put forward for cycling performance. To meet the market demand, it is necessary to develop a negative electrode active material with high initial coulombic efficiency and long-cycling performance, so as to improve the performance of the secondary battery. In the prior art, two ways are typically adopted to improve the initial coulombic efficiency and cycling performance, namely, selecting a single particle type and coating the particle surface with amorphous carbon. However, these two ways cause a great loss in energy density of the negative electrode active material. Therefore, it is necessary to put forward a new technical scheme to improve the cycling performance and energy density of negative electrode active materials.

### SUMMARY

In view of the preceding problem existing in the prior art, this application provides a negative electrode active material and a secondary battery including the negative electrode active material, so as to improve the quality of an SEI film on the surface of the negative electrode active material, thereby improving the initial coulombic efficiency and cycling performance of the secondary battery.

According to a first aspect, this application provides a negative electrode active material. The negative electrode active material includes a carbon-based material, where particle surface of the carbon-based material includes an alkali metal element, and the alkali metal element includes element sodium and/or element potassium. In this application, the surface of carbon-based material such as a graphite material is treated to obtain an organic substance layer similar to an SEI film on the particle surface. In this way, the organic substance on the particle surface can inhibit the formation of film on the negative electrode active material, which reduces the loss of active lithium ions and improves the initial coulombic efficiency of the negative electrode active material. In addition, element sodium and/or element potassium on the particle surface can improve the electrochemical stability of the organic substance, so as to avoid side reactions or even decomposition of the organic substance on the particle surface of the negative electrode active material, thereby improving the cycling performance of the secondary battery.

In some embodiments, under thermogravimetric test, in a temperature range of 25°C to 800°C, a mass loss ratio of the carbon-based material is denoted as S, where $S \geq 0.5\%$, and an exothermic peak value of the carbon-based material is denoted as T, where $300°C \leq T \leq 500°C$. Conventional graphite materials are stable at high temperature, and have small thermogravimetric mass loss ratio. In this application, due to the existence of an organic substance layer on the particle surface of the carbon-based material, the mass of carbon-based material will be lost during thermogravimetric test.

In some embodiments, $0.5\% \leq S \leq 5\%$. A larger mass loss ratio S indicates a higher percentage of the organic substance on the particle surface, and the high percentage of the organic substance can effectively improve the initial coulombic efficiency and cycling performance of the secondary battery. However, when S is too large, there will be too many side reactions and adverse effects such as gas generation and active lithium consumption during electrochemical reaction. In some embodiments, $1\% \leq S \leq 3\%$.

A decomposition temperature of the organic substance on the particle surface of carbon-based material is about 300°C to 500°C, so the temperature range T of an exothermic peak value (peak mass loss rate) of the carbon-based material is 300°C to 500°C. In some embodiments, $330°C \leq T \leq 420°C$.

In some embodiments, an atomic percentage of alkali metal elements on the particle surface is denoted as X, where $0.4\% \leq X \leq 3.0\%$. Element sodium or element potassium contributes to the formation of the SEI film on the surface of the negative electrode active material, which can effectively improve the quality of the SEI film, thereby improving the cycling performance of the secondary battery. However, too much element sodium or element potassium will make the SEI film too thick, which is not conducive to the improvement of cycling performance. In some embodiments, $0.6\% \leq X \leq 2.5\%$.

In some embodiments, the particle surface of the carbon-based material further includes element carbon, and an

atomic percentage of element carbon on the particle surface is denoted as C1, where C1<96%. In some embodiments, 90%≤C1≤95%.

In some embodiments, based on a mass of the carbon-based material, a mass percentage of element carbon in the carbon-based material is denoted as C, where C≥98%. Due to the low percentage of the organic substance layer on the particle surface of the carbon-based material, an overall carbon atom mass proportion of the carbon-based particles is higher than 98%. In some embodiments, 98.5%≤C≤99.9%.

In some embodiments, under Fourier infrared test, the particle surface of the carbon-based material contains a substance having an absorption peak in the range of 950 $cm^{-1}$ to 1200 $cm^{-1}$. In the Fourier infrared test spectrum, the absorption peak in the range of 950 $cm^{-1}$ to 1200 $cm^{-1}$ represents the vibration of chemical bonds composed of atoms such as C, H, and O. The fact that the carbon-based material has an absorption peak in this range can further explain that the particles of the carbon-based material themselves have a component similar to the SEI film due to surface modification treatment, so the SEI film formed will be reduced during the first charge and discharge, thereby improving the initial coulombic efficiency.

In some embodiments, the particle surface of the carbon-based material contains a substance having at least one functional group of hydroxyl group, carboxyl group, carbonyl group, sulfonic acid group, phenyl group, carbon-carbon double bond, or carbon-carbon triple bond.

In some embodiments, an initial coulombic efficiency CE of the carbon-based material satisfies CE≥93.0%. In some embodiments, CE≥94.0%.

In some embodiments, a particle size of the carbon-based material satisfies $D_v90/D_v50≤3.0$. $D_v90/D_v50$ being in the foregoing range can ensure the narrow distribution of carbon-based particles and avoid excessive small particles and large particles, which is conducive to improving the cycling performance and processing performance of the secondary battery. Too many small particles in the carbon-based material will increase side reactions and affect the cycling performance of the secondary battery; and too many large particles will affect the processing performance, which may lead to the appearance defects such as bumps on the negative electrode plate, and even lead to punctate lithium precipitation. In some embodiments, $D_v90/D_v50≤2.5$.

In some embodiments, a specific surface area BET of the carbon-based material satisfies 0.5 $m^2/g$≤BET≤5.5 $m^2/g$. A too large BET will increase side reactions, which will affect the initial coulombic efficiency. A too small BET causes the wettability of the electrolyte to the negative electrode to become worse, which will further affect the kinetic performance of the secondary battery. In some embodiments, 1.5 $m^2/g$≤BET≤5 $m^2/g$.

In some embodiments, a tap density TD of the carbon-based material satisfies TD≥0.6 $g/cm^3$. TD is related to the processability of the carbon-based material slurry. Too low tap density will lead to poor dispersion of the carbon-based material slurry in preparation of the secondary battery, which makes the slurry prone to sedimentation, causes uneven coating thickness, and thus affects electrical performance of the secondary battery. In some embodiments, TD≥0.8 $g/cm^3$.

In some embodiments, the OI value of the carbon-based material satisfies 4≤OI≤15. The OI value of the carbon-based material indicates the consistency of orientation of crystals in particles of the carbon-based material. A large OI value indicates a high crystal orientation consistency and a relatively single direction of lithium ion intercalation and deintercalation in the active particles, which leads to difficulty in intercalation and deintercalation of lithium, seriously leads to lithium precipitation, and thus reduces the cycling performance of the secondary battery. In some embodiments, OI≤8.

In some embodiments, the carbon-based material includes graphite. In some embodiments, graphite includes one or more of natural graphite and artificial graphite.

In some embodiments, the preparation method of the carbon-based material includes the following steps:

S1: Provide a graphite composite material;
S2: Mix the graphite composite material with an oxidant, and perform oxidation treatment to obtain an oxidized graphite composite material; and
S3: Mix the oxidized graphite composite material with an organic salt of an alkali metal to obtain a carbon-based material.

In some embodiments, in S2, the oxidant is selected from at least one of hydrogen peroxide solution, sulfuric acid solution, nitric acid solution, or potassium permanganate. In some embodiments, the oxidant is hydrogen peroxide solution, where a concentration of the hydrogen peroxide solution is 3 mol/L to 7 mol/L.

In some embodiments, in S3, the organic salt of the alkali metal is selected from organic salts having at least one functional group of hydroxyl group, carboxyl group, carbonyl group, sulfonic acid group, phenyl group, carbon-carbon double bond, or carbon-carbon triple bond. In some embodiments, the organic salt of the alkali metal is selected from at least one of an organic acid alkali metal salt or an organic sulfonic acid alkali metal salt. In some embodiments, the organic salt of the alkali metal is selected from at least one of sodium benzoate, potassium benzoate, sodium p-toluenesulfonate, or potassium oxalate.

In some embodiments, in S3, based on a mass of the oxidized graphite composite material, a mass percentage of

the organic salt of the alkali metal is 0.5% to 3%.

In some embodiments, the providing a graphite composite material includes the following steps:

S11: Pulverize a graphite raw material, for example, until the $D_v50$ is 8 $\mu$m to 11 $\mu$m;
S12: Pre-carbonize the pulverized raw material;
S13: Mix the pre-carbonized product with asphalt for granulation; and
S14: Graphitize the granulated product to obtain the graphite composite material.

In some embodiments, the preparation method of the carbon-based material includes: pulverizing an artificial graphite raw material, pre-carbonizing the pulverized raw material, adding asphalt for granulation after the treatment, and graphitizing at high temperature after the granulation to obtain the graphite composite material. The graphite composite material is subjected to surface modification treatment (which specifically includes oxidation treatment, and then mixing treatment of the oxidized graphite composite material with an organic salt solution of alkali metal) to obtain the negative electrode active material.

According to a second aspect, this application provides a secondary battery including a negative electrode, where the negative electrode includes a negative electrode active material layer, and the negative electrode active material layer includes the negative electrode active material according to the first aspect.

In some embodiments, a compacted density P of the negative electrode satisfies 1.3 g/cm$^3$≤P≤1.8 g/cm$^3$. The compacted density of the negative electrode affects the energy density and kinetic performance of the secondary battery. When the compacted density is too low, the energy density of the secondary battery is low, and the adhesion of the negative electrode active material particles on the current collector becomes poor, which may cause the negative electrode to be demoulded, and thus reduces the cycling performance of the secondary battery. When the compacted density is too high, the wettability of the electrolyte to the negative electrode will be obviously reduced, and the kinetics of the secondary battery will also be reduced, which makes the secondary battery prone to lithium precipitation during the cycling, and leads to a decrease in cycling performance of the secondary battery. In some embodiments, 1.33 g/cm$^3$≤P≤1.68 g/cm$^3$.

In some embodiments, a single-sided capacitance M per unit area of the negative electrode satisfies 1.0 mAh/cm$^2$≤M≤4.0 mAh/cm$^2$. The capacitance M represents the coating amount of the negative electrode active material applied on one side. When the capacitance M is low, the coating amount is small, which is beneficial to the rate performance of the secondary battery, but the energy density of the secondary battery is low. When the capacitance M is too high, the coating amount is too large, which may lead to the thick active material layer, and thus affects the deintercalation of lithium ions and reduces the rate performance of the secondary battery. In some embodiments, 1.5 mAh/cm$^2$≤M≤3.5 mAh/cm$^2$.

In some embodiments, an initial coulombic efficiency FE of the secondary battery satisfies FE≥90.0%. In some embodiments, a capacity retention rate of the secondary battery after 2000 cycles at 25°C is ≥86%, for example ≥90%.

According to a third aspect, this application provides an electronic apparatus, including the secondary battery according to the second aspect.

In this application, the surface of carbon-based material such as a graphite material is treated to obtain an organic substance layer similar to an SEI film on the particle surface, which can effectively improve the quality of the SEI film, thereby improving the initial coulombic efficiency and cycling performance of the secondary battery.

## BRIEF DESCRIPTION OF DRAWINGS

FIG. 1 shows cycling performance of lithium-ion batteries in Example 1 and Comparative Example 1 of this application.
FIG. 2 is a thermogravimetric mass loss test chart of a carbon-based material in Example 2 of this application.

## DESCRIPTION OF EMBODIMENTS

Embodiments of this application are described in detail below. The embodiments of this application should not be construed as a limitation on this application.

In addition, quantities, ratios, and other values are sometimes presented in the format of ranges in this application. It should be understood that such range formats are used for convenience and simplicity and should be flexibly understood as including not only values clearly designated as falling within the range but also all individual values or sub-ranges covered by the range as if each value and sub-range are clearly designated.

In the specific embodiments and claims, an item list connected by the terms "at least one of", "at least one piece of", "at least one kind of" or other similar terms may mean any combination of the listed items. For example, if items A and B are listed, the phrase "at least one of A or B" means only A; only B; or A and B. In another example, if items A, B, and C are

listed, the phrase "at least one of A, B, or C" means only A; only B; only C; A and B (exclusive of C); A and C (exclusive of B); B and C (exclusive of A); or all of A, B, and C. The item A may contain a single element or a plurality of elements. The item B may include a single element or a plurality of elements. The item C may include a single element or a plurality of elements.

I. Negative electrode active material

The negative electrode active material provided in this application includes a carbon-based material, where particle surface of the carbon-based material includes an alkali metal element, and the alkali metal element includes element sodium and/or element potassium. In this application, the surface of carbon-based material such as a graphite material is treated to obtain an organic substance layer similar to an SEI film on the particle surface. In this way, the organic substance on the particle surface can inhibit the formation of film on the surface of the negative electrode active material, which reduces the loss of active lithium ions and improves the initial coulombic efficiency of the negative electrode active material. In addition, element sodium and/or element potassium on the particle surface can improve the electrochemical stability of the organic substance, so as to avoid side reactions or even decomposition of the organic substance on the particle surface of the negative electrode active material, thereby improving the cycling performance of the secondary battery.

In this application, the "particle surface of the carbon-based material" may be a zone extending in a direction from the outermost side of the carbon-based material particles to the center of the carbon-based material particles by 1 $\mu$m+/-0.2 $\mu$m. In some embodiments, the "particle surface of the carbon-based material" may be any zone of 100 $\mu$m$\times$100 $\mu$m in the scanning electron microscope field of view under the condition that the carbon-based material is observed with a scanning electron microscope and works at an accelerating voltage of 10$\pm$0.5 KV and in a working distance of 10 mm$\pm$0.5 mm.

In some embodiments, under thermogravimetric test, in a temperature range of 25°C to 800°C, a mass loss ratio of the carbon-based material is denoted as S, where S$\geq$0.5%, and an exothermic peak value of the carbon-based material is denoted as T, where 300°C$\leq$T$\leq$500°C. Conventional graphite materials are stable at high temperature, and have small thermogravimetric mass loss ratio. Due to the existence of an organic substance layer on the particle surface, the mass of carbon-based material will be lost during thermogravimetric test.

In some embodiments, S is 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, or in a range defined by any two of those values. A larger mass loss ratio S indicates a higher percentage of the organic substance on the particle surface, and the high percentage of the organic substance can effectively improve the initial coulombic efficiency and cycling performance of the secondary battery. However, when S is too large, there will be too many side reactions and adverse effects such as gas generation and active lithium consumption during electrochemical reaction. In some embodiments, 0.5%$\leq$S$\leq$5%. In some embodiments, 1%$\leq$S$\leq$3%.

In some embodiments, T is 310°C, 320°C, 330°C, 340°C, 350°C, 360°C, 370°C, 380°C, 390°C, 400°C, or in a range defined by any two of those values. A decomposition temperature of the organic substance on the particle surface of carbon-based material is about 300°C to 500°C, so the temperature range T of an exothermic peak value (peak mass loss rate) of the organic substance is 300°C to 500°C. In some embodiments, 330'C<T<420'C.

In some embodiments, an atomic percentage of alkali metal elements on the particle surface is denoted as X, where 0.4%$\leq$X$\leq$3.0%. In some embodiments, X is 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, or in a range defined by any two of those values. Element sodium or element potassium contributes to the formation of the SEI film on the surface of the carbon-based material, which can effectively improve the quality of the SEI film, thereby improving the cycling performance of the secondary battery. However, too much element sodium or element potassium will make the SEI film too thick, which is not conducive to the improvement of cycling performance. In some embodiments, 0.6%$\leq$X$\leq$2.5%.

In this application, X is tested by the following test methods: under the condition of observing the carbon-based material with a scanning electron microscope, any zone of 100 $\mu$m$\times$100 $\mu$m in the scanning electron microscope field of view is selected, and the percentage of alkali metal elements in this zone is tested by EDS surface scanning to obtain X.

In some embodiments, the particle surface of the carbon-based material further includes element carbon, and an atomic percentage of element carbon on the particle surface is denoted as C1, where C1$\leq$96%. In some embodiments, C1 is 90%, 90.5%, 91%, 91.5%, 92%, 92.5%, 93%, 93.5%, 94%, 94.5%, 95%, 95.5%, or in a range defined by any two of those values. In some embodiments, 90%$\leq$C1$\leq$95%.

In this application, C1 is tested by the following test methods: under the condition of observing the carbon-based material with a scanning electron microscope, any zone of 100 $\mu$m$\times$100 $\mu$m in the scanning electron microscope field of view is selected, and the percentage of element carbon in this zone is tested by EDS surface scanning to obtain C1.

In some embodiments, based on a mass of the carbon-based material, a mass percentage of element carbon in the carbon-based material is denoted as C, where C$\geq$98%. In some embodiments, C is 98.1%, 98.2%, 98.3%, 98.4%,

98.5%, 98.6%, 98.7%, 98.8%, 98.9%, 99%, 99.1%, 99.2%, 99.3%, 99.4%, 99.5%, 99.6%, 99.7%, 99.8%, 99.9%, or in a range defined by any two of those values. Due to the low percentage of the organic substance layer on the particle surface of the carbon-based material and the main body of the carbon-based material being a carbon, an overall carbon atom mass proportion of the carbon-based material particles is higher than 98%. In some embodiments, 98.5%≤C≤99.9%.

In some embodiments, under Fourier infrared test, the particle surface of the carbon-based material contains a substance having an absorption peak in the range of 950 $cm^{-1}$ to 1200 $cm^{-1}$. In the Fourier infrared test spectrum, the absorption peak in the range of 950 $cm^{-1}$ to 1200 $cm^{-1}$ represents the vibration of chemical bonds composed of atoms such as C, H, and O. The fact that the carbon-based material has an absorption peak in this range can further explain that the particles of the carbon-based material themselves have a component similar to the SEI film due to surface modification treatment, so the SEI film formed will be reduced during the first charge and discharge, thereby improving the initial coulombic efficiency.

In some embodiments, the particle surface of the carbon-based material contains a substance having at least one functional group of hydroxyl group, carboxyl group, carbonyl group, sulfonic acid group, phenyl group, carbon-carbon double bond, or carbon-carbon triple bond.

In some embodiments, the particle surface of the carbon-based material contains a substance derived from an organic salt of an alkali metal, the organic salt of the alkali metal is selected from organic salts having at least one functional group of hydroxyl group, carboxyl group, carbonyl group, sulfonic acid group, phenyl group, carbon-carbon double bond, or carbon-carbon triple bond.

In some embodiments, the organic salt of the alkali metal is selected from at least one of an organic acid alkali metal salt or an organic sulfonic acid alkali metal salt.

In some embodiments, the organic acid alkali metal salt includes at least one of compounds represented by formula I, formula II, or formula III,

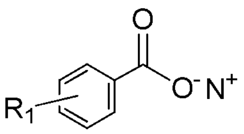 formula I, 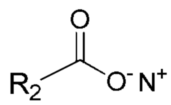 formula II,

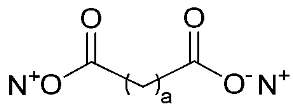 formula III

In the formulas, $R_1$ and $R_2$ are each independently selected from hydrogen or $C_1$-$C_6$ alkyl group, N is selected from sodium and/or potassium, and a is an integer from 0 to 6. In some embodiments, $R_1$ and $R_2$ are each independently selected from hydrogen, methyl, ethyl, n-propyl, isopropyl, n-butyl, isobutyl, tert-butyl, n-pentyl, isopentyl, or n-hexyl, and a is 0, 1, 2, 3, 4, 5, or 6.

In some embodiments, the organic acid alkali metal salt includes at least one of compounds represented by formula I-1, formula I-2, or formula I-3,

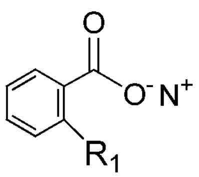 formula I-1, 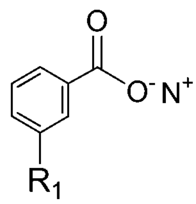 formula I-2,

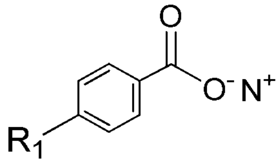 formula I-3

In the formulas, $R_1$ is selected from hydrogen, $C_1$-$C_4$ alkyl group, or $C_5$-$C_6$ alkyl group, N is selected from sodium and/or potassium, and a is an integer from 0 to 6. In some embodiments, $R_1$ is selected from hydrogen, methyl, ethyl, n-propyl, isopropyl, n-butyl, isobutyl, tert-butyl, n-pentyl, isopentyl, or n-hexyl, and a is 0, 1, 2, 3, 4, 5, or 6.

In some embodiments, the organic sulfonic acid alkali metal salt includes at least one of compounds represented by formula IV,

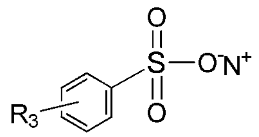

formula IV

In formula IV, $R_3$ is selected from hydrogen or $C_1$-$C_6$ alkyl group, and N is selected from sodium and/or potassium. In some embodiments, $R_3$ is selected from hydrogen, methyl, ethyl, n-propyl, isopropyl, n-butyl, isobutyl, tert-butyl, n-pentyl, isopentyl, or n-hexyl.

In some embodiments, the organic sulfonic acid alkali metal salt includes at least one of compounds represented by formula IV-1, formula IV-2, or formula IV-3,

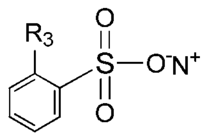

formula IV-1,

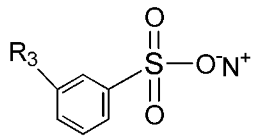

formula IV-2,

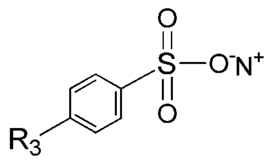

formula IV-3

In the formulas, $R_3$ is selected from hydrogen, $C_1$-$C_4$ alkyl group, or $C_5$-$C_6$ alkyl group, and N is selected from sodium and/or potassium. In some embodiments, $R_3$ is selected from hydrogen, methyl, ethyl, n-propyl, isopropyl, n-butyl, isobutyl, tert-butyl, n-pentyl, isopentyl, or n-hexyl.

In some embodiments, the organic salt of the alkali metal is selected from at least one of sodium benzoate, potassium benzoate, sodium p-toluenesulfonate, or potassium oxalate.

In some embodiments, an initial coulombic efficiency CE of the carbon-based material satisfies CE≥93.0%. For example, the initial coulombic efficiency CE is 93.5%, 94%, 94.5%, 95%, 95.5%, or 96%. In some embodiments, CE≥94.0%.

In some embodiments, a particle size of the carbon-based material satisfies $D_v90/D_v50 \leq 3.0$. In some embodiments, $D_v90/D_v50$ may be 1.5, 1.7, 2.0, 2.1, 2.2, 2.3, 2.4, 2.5, 2.6, 2.7, 2.8, or 2.9, or in a range defined by any two of these values. $D_v90/D_v50$ being in the foregoing range can ensure the narrow distribution of carbon-based particles and avoid excessive small particles and large particles, which is conducive to improving the cycling performance and processing performance of the secondary battery. Too many small particles in the carbon-based material will increase side reactions and affect the cycling performance of the secondary battery; and too many large particles will affect the processing performance, which may lead to the appearance defects such as bumps on the negative electrode plate, and even lead to punctate lithium precipitation. In some embodiments, $D_v90/D_v50 \leq 2.5$.

In some embodiments, $D_v90$ of the carbon-based material is 30 μm to 50 μm. In some embodiments, $D_v90$ of the carbon-based material is 31 μm, 32 μm, 33 μm, 34 μm, 35 μm, 36 μm, 37 μm, 38 μm, 39 μm, 40 μm, 41 μm, 42 μm, 43 μm, 44 μm, 45 μm, 46 μm, 47 μm, 48 μm, 49 μm, or in a range defined by any two of these values. In some embodiments, $D_v50$ of the carbon-based material is 10 μm to 15 μm. In some embodiments, $D_v50$ of the carbon-based material is 10 μm, 10.5 μm, 11 μm, 11.5 μm, 12 μm, 12.5 μm, 13 μm, 13.5 μm, 14 μm, 14.5 μm, or in a range defined by any two of these values.

In some embodiments, a specific surface area BET of the carbon-based material satisfies $0.5\ m^2/g \leq BET \leq 5.5\ m^2/g$. In some embodiments, the specific surface area BET of the carbon-based material is 0.5 $m^2/g$, 1.0 $m^2/g$, 1.5 $m^2/g$, 2 $m^2/g$, 2.5 $m^2/g$, 3 $m^2/g$, 3.5 $m^2/g$, 4 $m^2/g$, 4.5 $m^2/g$, 5 $m^2/g$, or in a range defined by any two of these values. A too large BET will increase side reactions, which will affect the initial coulombic efficiency. A too small BET causes the wettability of the electrolyte to the negative electrode to become worse, which will further affect the kinetic performance of the secondary battery. In some embodiments, $1.5\ m^2/g \leq BET \leq 5\ m^2/g$.

In some embodiments, a tap density TD of the carbon-based material satisfies $TD \geq 0.6\ g/cm^3$. In some embodiments, TD is 0.65 $g/cm^3$, 0.7 $g/cm^3$, 0.75 $g/cm^3$, 0.8 $g/cm^3$, 0.85 $g/cm^3$, 0.9 $g/cm^3$, 0.95 $g/cm^3$, 1.0 $g/cm^3$, 1.05 $g/cm^3$, 1.1 $g/cm^3$, 1.15 $g/cm^3$, 1.2 $g/cm^3$, 1.25 $g/cm^3$, 1.3 $g/cm^3$, 1.4 $g/cm^3$, 1.5 $g/cm^3$, or in a range defined by any two of these values. TD is related to the processability of the carbon-based material slurry. Too low tap density will lead to poor

dispersion of the carbon-based material slurry in preparation of the secondary battery, which makes the slurry prone to sedimentation, causes uneven coating thickness, and thus affects electrical performance of the secondary battery. In some embodiments, TD≥0.8 g/$cm^3$.

In some embodiments, the OI value of the carbon-based material satisfies 4≤OI≤15. In some embodiments, OI is 5, 5.5, 6, 6.5, 7, 7.5, 8, 9, 10, 11, 12, 13, 14, or in a range defined by any two of these values. The OI value of the carbon-based material indicates the consistency of orientation of crystals in particles of the carbon-based material. A large OI value indicates a high crystal orientation consistency and a relatively single direction of lithium ion intercalation and deintercalation in the active particles, which leads to difficulty in deintercalation of lithium, seriously leads to lithium precipitation, and thus reduces the cycling performance of the secondary battery. In some embodiments, 5≤OI≤12.

In some embodiments, the preparation method of the carbon-based material includes the following steps:

S1: Provide a graphite composite material;
S2: Mix the graphite composite material with an oxidant, and perform oxidation treatment to obtain an oxidized graphite composite material; and
S3: Mix the oxidized graphite composite material with an organic salt of an alkali metal to obtain a carbon-based material.

In some embodiments, in S2, the oxidant is selected from at least one of hydrogen peroxide solution, sulfuric acid solution, nitric acid solution, or potassium permanganate. In some embodiments, the oxidant is hydrogen peroxide solution, where a concentration of the hydrogen peroxide solution is 3 mol/L to 7 mol/L, for example, 3.5 mol/L, 4 mol/L, 4.5 mol/L, 5 mol/L, 5.5 mol/L, 6 mol/L, or 6.5 mol/l.

In some embodiments, in S2, the temperature of oxidation treatment is 20°C to 60°C, for example, 25°C, 30°C, 35°C, 40°C, 45°C, 50°C, or 55°C. In some embodiments, in S2, the time of oxidation treatment is 4h to 15h, for example, 4h, 6h, 8h, 10h, 12h, or 14h.

In some embodiments, in S3, the organic salt of the alkali metal is selected from organic salts having at least one functional group of hydroxyl group, carboxyl group, carbonyl group, sulfonic acid group, phenyl group, carbon-carbon double bond, or carbon-carbon triple bond. In some embodiments, the organic salt of the alkali metal is selected from at least one of an organic acid alkali metal salt or an organic sulfonic acid alkali metal salt.

In some embodiments, the organic acid alkali metal salt includes at least one of compounds represented by formula I, formula II, or formula III,

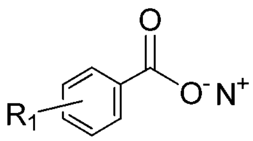 formula I, 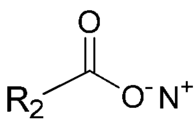 formula II,

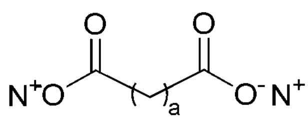 formula III

In the formulas, $R_1$ and $R_2$ are each independently selected from hydrogen or $C_1$-$C_6$ alkyl group, N is selected from sodium and/or potassium, and a is an integer from 0 to 6. In some embodiments, $R_1$ and $R_2$ are each independently selected from hydrogen, methyl, ethyl, n-propyl, isopropyl, n-butyl, isobutyl, tert-butyl, n-pentyl, isopentyl, or n-hexyl, and a is 0, 1, 2, 3, 4, 5, or 6.

In some embodiments, the organic acid alkali metal salt includes at least one of compounds represented by formula I-1, formula I-2, or formula I-3,

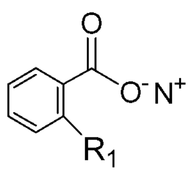 formula I-1, 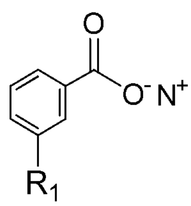 formula I-2,

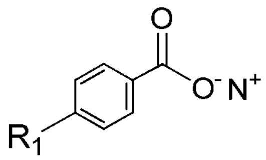

formula I-3

In the formulas, $R_1$ is selected from hydrogen, $C_1$-$C_4$ alkyl group, or $C_5$-$C_6$ alkyl group, N is selected from sodium and/or potassium, and a is an integer from 0 to 6. In some embodiments, $R_1$ is selected from hydrogen, methyl, ethyl, n-propyl, isopropyl, n-butyl, isobutyl, tert-butyl, n-pentyl, isopentyl, or n-hexyl, and a is 0, 1, 2, 3, 4, 5, or 6.

In some embodiments, the organic sulfonic acid alkali metal salt includes at least one of compounds represented by formula IV,

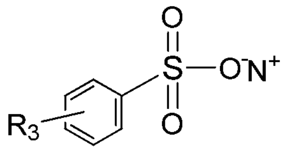

formula IV

In formula IV, $R_3$ is selected from hydrogen or $C_1$-$C_6$ alkyl group, and N is selected from sodium and/or potassium. In some embodiments, $R_3$ is selected from hydrogen, methyl, ethyl, n-propyl, isopropyl, n-butyl, isobutyl, tert-butyl, n-pentyl, isopentyl, or n-hexyl.

In some embodiments, the organic sulfonic acid alkali metal salt includes at least one of compounds represented by formula IV-1, formula IV-2, or formula IV-3,

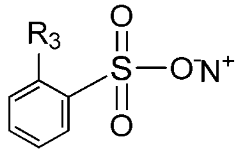

formula IV-1,

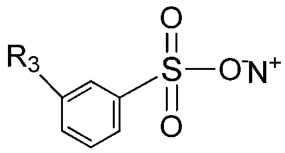

formula IV-2,

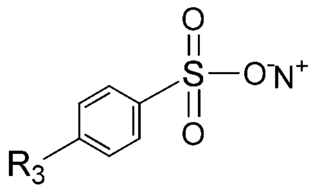

formula IV-3

In the formulas, $R_3$ is selected from hydrogen, $C_1$-$C_4$ alkyl group, or $C_5$-$C_6$ alkyl group, and N is selected from sodium and/or potassium. In some embodiments, $R_3$ is selected from hydrogen, methyl, ethyl, n-propyl, isopropyl, n-butyl, isobutyl, tert-butyl, n-pentyl, isopentyl, or n-hexyl.

In some embodiments, the organic salt of the alkali metal is selected from at least one of sodium benzoate, potassium benzoate, sodium p-toluenesulfonate, or potassium oxalate.

In some embodiments, in S3, the oxidized graphite composite material is mixed with a solution of an organic salt of an alkali metal, such as an aqueous solution or an alcohol solution. In some embodiments, in S3, the mixing temperature is 40°C to 80°C, for example, 45°C, 50°C, 55°C, 60°C, 65°C, 70°C, or 75°C. In some embodiments, in S3, the mixing time is 5h to 10h, for example, 6h, 7h, or 8h.

In some embodiments, in S3, based on a mass of the oxidized graphite composite material, a mass percentage of the organic salt of the alkali metal is 0.5% to 3%, for example, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, or 2.9%.

In some embodiments, the providing a graphite composite material includes the following steps:

S11: Pulverize a graphite raw material, for example, until the $D_v50$ is 8 μm to 11 μm;
S12: Pre-carbonize the pulverized raw material;
S13: Mix the pre-carbonized product with asphalt for granulation; and
S14: Graphitize the granulated product to obtain the graphite composite material.

In some embodiments, in S11, the graphite raw material is selected from petroleum coke. In some embodiments,

in S12, the pre-carbonizing temperature is 800°C to 1200°C, for example, 850°C, 900°C, 950°C, 1000°C, 1050°C, 1100°C, or 1150°C.

In some embodiments, in S13, the amount of asphalt added is 5% to 15% of the mass of the graphite raw material, for example, 6%, 8%, 10%, 12%, or 14%. In some embodiments, in S13, the granulation time is 2h to 4h, for example, 2.5h, 3h, or 3.5h. In some embodiments, in S13, the granulation time is 200°C to 500°C, for example, 250°C, 300°C, 350°C, 400°C, or 450°C.

In some embodiments, in S14, the graphitizing temperature is 2600°C to 3100°C, for example, 2700°C, 2800°C, 2900°C, or 3000°C.

In some embodiments, the preparation method of the carbon-based material includes: pulverizing an artificial graphite raw material, pre-carbonizing the pulverized raw material, adding asphalt for granulation after the treatment, and graphitizing at high temperature after the granulation to obtain the graphite composite material. The graphite composite material is subjected to surface modification treatment (which specifically includes oxidation treatment, and then mixing treatment of the oxidized graphite composite material with an organic salt solution of alkali metal) to obtain the carbon-based material.

II. Secondary battery

This application provides a secondary battery including a negative electrode, where the negative electrode includes a negative electrode active material layer, and the negative electrode active material layer includes the negative electrode active material according to the first aspect.

In some embodiments, a compacted density P of the negative electrode satisfies 1.3 $g/cm^3 \le P \le 1.8$ $g/cm^3$. In some embodiments, P is 1.35 $g/cm^3$, 1.4 $g/cm^3$, 1.45 $g/cm^3$, 1.5 $g/cm^3$, 1.55 $g/cm^3$, 1.6 $g/cm^3$, 1.65 $g/cm^3$, 1.7 $g/cm^3$, 1.75 $g/cm^3$, or in a range defined by any two of these values. The compacted density of the negative electrode affects the energy density and kinetic performance of the secondary battery. When the compacted density is too low, the energy density of the secondary battery is low, and the adhesion of the negative electrode active material particles on the current collector becomes poor, which may cause the negative electrode to be demoulded, and thus reduces the cycling performance of the secondary battery. When the compacted density is too high, the wettability of the electrolyte to the negative electrode will be obviously reduced, and the kinetics of the secondary battery will also be reduced, which makes the secondary battery prone to lithium precipitation during the cycling, and leads to a decrease in cycling performance of the secondary battery. In some embodiments, 1.33 $g/cm^3 \le P \le 1.68$ $g/cm^3$.

In some embodiments, a single-sided capacitance M per unit area of the negative electrode satisfies 1.0 $mAh/cm^2 \le M \le 4.0$ $mAh/cm^2$. In some embodiments, M is 1.5 $mAh/cm^2$, 2 $mAh/cm^2$, 2.5 $mAh/cm^2$, 3.0 $mAh/cm^2$, or 3.5 $mAh/cm^2$. The capacitance M represents the coating amount of the active material applied on one side of the negative electrode. When the capacitance M is low, the coating amount is small, which is beneficial to the rate performance of the secondary battery, but the energy density of the secondary battery is low. When the capacitance M is too high, the coating amount is too large, which may lead to the thick active material layer, and thus affects the deintercalation of lithium ions and reduces the rate performance of the secondary battery. In some embodiments, 1.5 $mAh/cm^2 \le M \le 3.5$ $mAh/cm^2$.

In some embodiments, an initial coulombic efficiency FE of the secondary battery satisfies FE≥90.0%. In some embodiments, a capacity retention rate of the secondary battery after 2000 cycles at 25°C is ≥86%, for example ≥90%.

In some embodiments, the negative electrode further includes a negative electrode current collector, where the negative electrode current collector includes copper foil, aluminum foil, nickel foil, stainless steel foil, titanium foil, foamed nickel, foamed copper, polymer base coated with conductive metal, or any combination thereof.

In some embodiments, the negative electrode active material layer may further include another negative electrode active material, such as a silicon oxide material and a silicon carbon material, which can further improve the energy density of the secondary battery.

In some embodiments, the negative electrode active material layer further includes a binder and a conductive agent. In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, or the like.

In some embodiments, the conductive agent includes but is not limited to carbon-based materials, metal-based materials, conductive polymers, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The secondary battery of this application further includes a positive electrode, where the positive electrode includes a positive electrode current collector and a positive electrode active material layer, and the positive electrode active material layer includes a positive electrode active material, a binder, and a conductive agent.

In some embodiments, the positive electrode current collector may be a metal foil or a composite current collector. For example, an aluminum foil may be used. The composite current collector may be formed by forming a metal material (copper, copper alloy, nickel, nickel alloy, titanium, titanium alloy, silver, silver alloy, or the like) on a polymer matrix.

In some embodiments, the positive electrode active material includes at least one of lithium cobalt oxide, lithium nickel manganese cobalt oxide, lithium nickel manganese aluminate, lithium iron phosphate, lithium vanadium phosphate, lithium cobalt phosphate, lithium manganese phosphate, lithium iron manganese phosphate, lithium iron silicate, lithium vanadium silicate, lithium cobalt silicate, lithium manganese silicate, spinel lithium manganate, spinel lithium nickel manganate, or lithium titanate. In some embodiments, the binder includes a binder polymer, for example, at least one of polyvinylidene fluoride, polytetrafluoroethylene, polyolefins, sodium carboxymethylcellulose, lithium carboxymethylcellulose, modified polyvinylidene fluoride, modified SBR rubber, or polyurethane. In some embodiments, the polyolefin binder includes at least one of polyethylene, polypropylene, polyvinyl ester, polyvinyl alcohol, or polyacrylic acid. In some embodiments, the conductive agent includes: a carbon-based material such as natural graphite, artificial graphite, carbon black, acetylene black, Ketjen black, or carbon fiber; a metal-based material such as metal powder or metal fiber including copper, nickel, aluminum, silver, and the like; and a conductive polymer such as a polyphenylene derivative; or a combination thereof.

The secondary battery of this application further includes a separator. A material or shape of the separator used in the secondary battery according to this application is not particularly limited, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, membrane, or composite membrane having a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic substance layer, or may be a layer formed by a mixed polymer and an inorganic substance. The inorganic substance layer includes inorganic particles and the binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer includes a polymer, and a material of the polymer is selected from at least one of a polyamide, a polyacrylonitrile, an acrylate polymer, a polyacrylic acid, a polyacrylate, a polyvinylpyrrolidone, a polyvinyl ether, a polyvinylidene fluoride, and a poly(vinylidene fluoride-hexafluoropropylene).

The secondary battery of this application further includes an electrolyte. The electrolyte that can be used in this application may be an electrolyte known in the prior art.

In some embodiments, the electrolyte includes an organic solvent, a lithium salt, and an optional additive. The organic solvent of the electrolyte in this application may be any organic solvent known in the prior art which can be used as a solvent of the electrolyte. An electrolyte used in the electrolyte according to this application is not limited, and may be any electrolyte known in the prior art. The additive of the electrolyte according to this application may be any additive known in the prior art which can be used as an additive of the electrolyte. In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, at least one of 1,3-dioxolane (DOL) and ethylene glycol dimethyl ether (DME). In some embodiments, the lithium salt includes at least one of an organic lithium salt or an inorganic lithium salt. In some embodiments, the lithium salt includes, but is not limited to: lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalate) borate $LiB(C_2O_4)_2$ (LiBOB), or lithium difluoro(oxalato)borate $LiBF_2(C_2O_4)$ (LiDFOB). In some embodiments, the additive includes at least one of fluoroethylene carbonate or adiponitrile.

In some embodiments, the secondary battery of this application includes but is not limited to a lithium-ion battery or a sodium-ion battery. In some embodiments, the secondary battery includes a lithium-ion battery.

III. Electronic apparatus

This application further provides an electronic apparatus, including the secondary battery in the second aspect of this application.

The electronic device or apparatus in this application is not particularly limited. In some embodiments, the electronic device of this application includes, but is not limited to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

In the following examples and comparative examples, all reagents, materials, and instruments used are commercially available unless otherwise specified.

**Examples and comparative examples**

**Example 1**

Preparation of carbon-based material

Step S1: Petroleum coke was selected as a raw material of artificial graphite. The petroleum coke was first crushed to particles with $D_v50$ of 9 μm, and then some small particles were removed through classification treatment, with a yield of crushed samples of 80%. Then the crushed material was treated at a high temperature of 1000°C to remove volatiles, and after the treatment, asphalt was added for granulation. The amount of asphalt added was 4% of the mass of the high-temperature treated material, the granulation time was controlled at 2h, and the granulation temperature was controlled at 300°C. Characteristics such as particle size and powder compacted density were controlled by controlling the amount of asphalt added. After granulation, graphitization treatment was carried out at high temperature at 2900°C, and a graphite composite material was obtained after the graphitization.

Step S2: Surface oxidation treatment was first carried out on the graphite composite material, then the graphite composite material was placed into a hydrogen peroxide ($H_2O_2$) solution with a concentration of 5.0 mol/L for soaking at 35°C for 8h, and then the graphite composite material was filtered and dried to obtain an oxidized graphite composite material.

S3. An organic salt sodium benzoate was selected as a surface modifier, where a mass of the sodium benzoate was 0.9% of a mass proportion of the oxidized graphite composite material. The sodium benzoate was dissolved in water, in which the oxidized graphite composite material was added. The resulting mixture was heated to 60°C and stirred for 6h, the mixed and stirred product was filtered, and then the filtered solid substance was washed with water and dried to obtain a carbon-based material.

Preparation of negative electrode plate

The foregoing prepared carbon-based material being used as a negative electrode active material, conductive carbon black, a binder styrene-butadiene rubber (SBR for short), and a thickener sodium carboxymethyl cellulose (CMC for short) were fully stirred and mixed at a weight ratio of 95.7:1.5:1.8:1 in an appropriate amount of deionized water solvent, to generate a uniform negative electrode slurry. The slurry was applied onto a current collector Cu foil, followed by drying and cold pressing, to obtain a negative electrode plate.

Preparation of positive electrode plate

Lithium iron phosphate (chemical formula: $LiFePO_4$) being selected as a positive electrode active material, a conductive agent acetylene black, and a binder polyvinylidene fluoride (PVDF for short) were fully stirred and mixed at a weight ratio of 96.3:2.2:1.5 in an appropriate amount of N-methylpyrrolidone (NMP for short) solvent, to generate a uniform positive electrode slurry. The slurry was applied onto a current collector Al foil, followed by drying and cold pressing, to obtain a positive electrode plate.

Preparation of electrolyte

In a glove box under a dry argon atmosphere, ethylene carbonate (EC), propylene carbonate (PC), ethyl methyl carbonate (EMC), and diethyl carbonate (DEC) were mixed at a mass ratio of EC:EMC:DEC=1:3:3:3. Fluoroethylene carbonate and 1,3-propane sultone were then added and dissolved, and the mixture was thoroughly stirred. Then, a lithium salt $LiPF_6$ was added and mixed uniformly to prepare an electrolyte. A mass percentage of $LiPF_6$ was 12.5%, a mass percentage of fluoroethylene carbonate was 2%, and a mass percentage of 1,3-propane sultone was 2%. The mass percentage of each substance was calculated based on a mass of the electrolyte.

Preparation of lithium-ion battery

A PE porous polymer film was selected as a separator. The negative electrode plate, the positive electrode plate, and the separator were wound and then placed in an aluminum-plastic film, and then the electrolyte was injected. After standing and formation, a lithium-ion secondary battery was prepared.

**Examples 2 to 15 and Comparative Examples 1 and 2**

Examples 2 to 15 and Comparative Examples 1 and 2 were implemented by adjusting the mass proportion and type of the organic salt on the basis of Example 1. See Table a for specific adjustment measures and Table 1 for detailed data.

**Table a**

| Examples and comparative examples | In step S3, mass percentage of organic salt to oxidized graphite composite material (%) | In step S3, type of organic salt |
|---|---|---|
| Example 1 | 0.9 | Sodium benzoate |
| Example 2 | 0.7 | Sodium benzoate |
| Example 3 | 0.8 | Sodium benzoate |
| Example 4 | 1.0 | Sodium benzoate |
| Example 5 | 1.3 | Sodium benzoate |
| Example 6 | 1.5 | Sodium benzoate |
| Example 7 | 1.9 | Sodium benzoate |
| Example 8 | 2.3 | Sodium benzoate |
| Example 9 | 2.5 | Sodium benzoate |
| Example 10 | 3.0 | Sodium benzoate |
| Example 11 | 1.0 | Potassium benzoate |
| Example 12 | 1.5 | Potassium benzoate |
| Example 13 | 3.0 | Potassium benzoate |
| Example 14 | 2.5 | Sodium glycinate |
| Example 15 | 3.6 | Potassium benzoate |
| Comparative Example 1 | 0.4 | Ferric acetate |
| Comparative Example 2 | 1.5 | Magnesium acetate |

**Examples 16 to 23**

Examples 16 to 23 were implemented by adjusting the concentration of hydrogen peroxide solution on the basis of Example 6. See Table b for specific adjustment measures and Table 2 for detailed data. Adjusting the concentration of hydrogen peroxide solution could adjust the surface modification state of negative electrode active material, and change the percentage of the organic salt on the surface and the combination state with composite graphite material.

**Table b**

| Examples | Concentration of hydrogen peroxide solution (mol/L) |
|---|---|
| Example 6 | 5.0 |
| Example 16 | 3.0 |
| Example 17 | 3.6 |
| Example 18 | 4.3 |
| Example 19 | 4.8 |

(continued)

| Examples | Concentration of hydrogen peroxide solution (mol/L) |
|---|---|
| Example 20 | 6.6 |
| Example 21 | 7.0 |
| Example 22 | 5.4 |
| Example 23 | 6.0 |

**Examples 24 to 29**

Examples 24 to 29 were on the basis of Example 23 to further optimize the initial coulombic efficiency and particle size of the negative electrode active material by adjusting the mass ratio of the organic salt and the particle size grinding process. See Table c for specific adjustment measures and Table 3 for detailed data.

**Table c**

| Examples | In step S3, mass percentage of organic salt to oxidized graphite composite material (%) | In step S1, $D_v50$ of pulverized petroleum coke particle size (μm) |
|---|---|---|
| Example 23 | 1.5 | 9.0 |
| Example 24 | 1.6 | 8.5 |
| Example 25 | 1.7 | 8.0 |
| Example 26 | 1.4 | 10.0 |
| Example 27 | 1.5 | 9.8 |
| Example 28 | 1.9 | 9.0 |
| Example 29 | 2.1 | 8.8 |

**Examples 30 to 43**

Examples 30 to 43 were further design optimization of the specific surface area BET, tap density TD, and powder OI value of the negative electrode active material on the basis of Example 28. See Table 4 for details.

**Examples 44 to 52**

Examples 44 to 52 were further design optimization of the compacted density P and single-sided capacitance M per unit area of the negative electrode plate on the basis of Example 42. See Table 5 for details.

**Test method**

**1. Particle size test**

The particle size test method was in accordance with GB/T 19077-2016. The specific process was as follows: weighing 1 g of the sample, mixing it evenly with 20 mL of deionized water and a small amount of dispersant, putting the resulting mixed solution in ultrasonic equipment for ultrasounding for 5min, and then pouring the solution into the injection system Hydro 2000SM for testing. The testing equipment used was Mastersizer 3000 from Malvern. During the test, when the laser beam passed through the dispersed particle sample, the particle size measurement was completed by measuring the intensity of scattered light. Then the data was used to analyze and calculate the particle size distribution that formed the scattering spectrum. The refractive index of the particles used in the test was 1.8, one sample was tested three times, and the particle size was finally the average of the three test results.

**2. OI value test**

A diffraction pattern of the (004) plane and a diffraction pattern of the (110) plane in an X-ray diffraction spectrum of the negative electrode plate was tested in accordance with Machinery Industry Standard of the People's Republic of China

JB/T 4220-2011 Determination Method of Artificial Graphite Lattice Parameter. Test conditions were as follows: The X-ray used CuKα radiation, the CuKα radiation was removed by a filter or a monochromator, a working voltage of an X-ray tube was (30-35) kV, and a working current was (15-20) mA. A scanning speed of a counter was 1/4(°)/min. When the diffraction pattern of 004 was recorded, a scanning range of a diffraction angle 2θ was 53° to 57°. When the diffraction pattern of 110 was recorded, a scanning range of a diffraction angle 2θ was 75° to 79°. A peak area obtained through the diffraction pattern of the plane (004) was denoted as C004. A peak area obtained through the diffraction pattern of the plane (110) was denoted as C110. The ratio C004/C110 of the negative electrode plate was calculated, which was the OI value of the negative electrode plate.

### 3. Specific surface area test

The specific surface area test method was in accordance with GB/T 19587-2017. The specific process was as follows: weighing 1 g to 8 g of samples (the sample should be weighed to cover at least 1/3 of the volume of the sphere), placing them in a 1/2 inch long tube with a bulb (the diameter of the sphere was 12 mm), pre-treating them at 200°C for 2h, and then placing them in the test equipment TriStar3030 (Mike Company, USA) for testing. The adsorbed gas used was $N_2$ (with a purity of 99.999%). The test was carried out at 77K and the specific surface area was tested through the calculation method of BET.

### 4. Tap density test

The tap density was the mass per unit volume measured after the powder in the container was tapped under specified conditions, in a unit of g/cm$^3$.

The test method was as follows: A graduated cylinder containing a certain mass of powder was fixed on a mechanical vibration device. The vibration motor drove the mechanical vibration device to vibrate vertically up and down. The graduated cylinder containing powder vibrated rhythmically with the mechanical vibration device. As the number of vibrations increased, the powder in the graduated cylinder was gradually tapped. After the number of vibrations reached the set number, the mechanical vibration device stopped vibrating, and the volume of the graduated cylinder was read. According to the definition of density: mass divided by volume, the compacted powder density was obtained. Specific process parameters: vibration time: 5000 times; vibration frequency: 250±15 times/min; and ambient temperature: 15°C to 28°C.

### 5. Initial coulombic efficiency CE test of carbon-based material

The initial coulombic efficiency test could be in accordance with the standard: GB/T 24533-2019. The carbon-based material was mixed, coated, rolled, sliced, and dried to prepare the negative electrode plate. Lithium plate was used as a positive electrode. A button battery was assembled for testing. The initial coulombic efficiency of the carbon-based material was calculated by testing the charge capacity and discharge capacity of the button battery. The formula of the carbon-based material slurry was the negative electrode active material with CMC:SP:SBR=94.5%:1.5%:1.5%:2.5% (mass percentage, where the solvent was deionized water).

### 6. Infrared spectrum (FTIR) test

Nicolet iS10 Fourier infrared (FT-IR) spectrometer was used, and the scanning spectrum range was 350 cm$^{-1}$ to 4000 cm$^{-1}$.

### 7. Mass loss ratio test of carbon-based material

The carbon-based material was tested by TG-MS, and the equipment model was STA449F3-QMS403.

Specifically, the sample was dried in a vacuum drying oven at 80°C for 2h, then the dried sample was put into an aluminum crucible, and the aluminum crucible was weighed on a balance before and after the sample was put into the aluminum crucible, to obtain the sample mass m1. After the sample was put in, the crucible cover and the crucible were pressed by a tablet machine to prevent the sample from being ejected from the crucible by thermal decomposition airflow or thermal decomposition during the heating, causing non-thermal decomposition weight loss in the experiment. Then, nitrogen was introduced as the protective atmosphere, and the temperature was raised to 800°C, where the heating rate was 2°C/min. After reaching 800°C, the temperature was kept for 2min. During the heating, the mass change of the carbon-based material was recorded, then the remaining sample mass m2 was weighed after cooling, and then the mass loss ratio of the carbon-based material could be obtained by the formula (m1-m2)/m1×100%. In addition, the position of mass loss velocity peak (exothermic peak) could be obtained from the mass change curve of the carbon-based material, and the

peak temperature could be obtained.

**8. Atomic percentage and mass ratio test of element on the particle surface of carbon-based material**

Elements on the particle surface of the carbon-based material were analyzed by EDS energy spectrometer. The atomic percentage and mass ratio test method of elements on the surface was in accordance with standard GB/T 17359-2012, and the energy spectrum method was used for quantitative analysis.

Testing process: under the requirements of standard experimental environment and testing standards, the carbon-based material was put into the scanning electron microscope sample chamber according to standard operating procedures, the test position was magnified and observed at a 10 kV accelerating voltage, and the samples were qualitatively and quantitatively analyzed with X-ray energy spectrometer. A surface zone was selected for scanning analysis, and the size of the selected zone was 100 μm×100 μm. The types of elements, atomic percentage, and mass proportion of carbon atoms on the surface of the carbon-based material could be obtained by EDS energy spectrum.

The specific equipment model and parameter settings were as follows:

Model: OXFORD EDS(X-max-20mm2); accelerating voltage: 10 KV; working distance: 10±0.5 mm; current: 2.335 A; and diaphragm: 60 μm.

**9. Mass percentage of carbon atoms in carbon-based material**

Some samples were first put in a vacuum drying oven at 80°C for 2h for drying, and then 1 g of dried samples were taken out and put into a crucible. The crucible was put in a muffle furnace for heating at a heating rate of 3°C/min to 1000°C. After the temperature was held for 2h, the mass m g of the residual substance in the crucible was weighed, and the mass percentage of carbon atoms in the carbon-based material was obtain by the formula (1-m)/1×100%.

**10. Initial coulombic efficiency FE test of lithium-ion battery**

After electrolyte injection, the electrode assembly was subjected to formation at the following conditions:

Temperature: 45°C

1. Charged at a constant current (CC) of 0.02C for 10min until a charge capacity was C1 mAh;
2. Left standing for 10min;
3. Charged at a CC of 0.2C for 60 min until a charge capacity was C2 mAh;
4. Left standing for 10min;
5. Charged at a CC of 0.5C to 3.6 V, and charged at a constant voltage (CV) to 0.05C, until a charge capacity was C3 mAh;
6. Discharged at a direct current (DC) of 0.5C to 2.5 V, until a discharge capacity was D1 mAh; and

Initial coulombic efficiency of lithium-ion battery: FE=D1/(C1+C2+C3)×100%.

**11. Lithium-ion battery cycle test**

Temperature: 25°C

1. Discharged at a DC of 0.5C to 2.5 V (first discharge);

2. Left standing for 10min;

3. Charged at a CC of 0.5C to 3.6 V, and charged at a CV to 0.05C;

4. Left standing for 10min;

5. Discharged at a DC of 0.5C to 2.5 V;

6. Repeated steps 2 to 5 for 2000 times; and

7. Discharge capacity at 2000th cycle/second discharge capacity×100%, that is, the capacity retention rate after 2000 cycles.

**Test result**

Table 1 shows the influences of the mass loss ratio S, exothermic peak value T, and atomic percentage X of the alkali metal element on the particle surface of the carbon-based material on the performance of the lithium-ion battery. The changes of S, T, and X are realized by adjusting the mass percentage of the organic salt in the oxidized graphite composite material and the type of the organic salt.

**Table 1**

| Examples and comparative examples | Mass loss ratio S (%) | Exothermic peak value temperature T (°C) | Atomic percentage X of alkali metal element (%) | Initial coulombic efficiency FE of lithium-ion battery (%) | Capacity retention rate of lithium-ion battery (%) |
|---|---|---|---|---|---|
| Example 1 | 1.05 | 370 | 0.6 | 92.0 | 91.2 |
| Example 2 | 0.67 | 380 | 0.4 | 91.5 | 91.0 |
| Example 3 | 0.79 | 425 | 0.5 | 91.6 | 91.1 |
| Example 4 | 1.16 | 420 | 0.8 | 91.8 | 91.3 |
| Example 5 | 1.56 | 419 | 0.9 | 92.3 | 91.4 |
| Example 6 | 1.67 | 405 | 1.1 | 92.5 | 91.6 |
| Example 7 | 2.07 | 396 | 1.5 | 92.2 | 91.5 |
| Example 8 | 2.45 | 365 | 1.6 | 91.9 | 91.4 |
| Example 9 | 2.67 | 337 | 1.9 | 91.5 | 91.3 |
| Example 10 | 3.12 | 315 | 2.2 | 91.3 | 91.1 |
| Example 11 | 1.15 | 418 | 0.7 | 91.6 | 91.2 |
| Example 12 | 1.69 | 407 | 1.0 | 92.4 | 91.5 |
| Example 13 | 4.77 | 339 | 2.8 | 91.4 | 91.2 |
| Example 14 | 2.62 | 510 | 1.2 | 90.6 | 89.6 |
| Example 15 | 5.53 | 537 | 3.5 | 89.4 | 87.3 |
| Comparative Example 1 | 0.20 | 556 | 0 | 86.5 | 79.3 |
| Comparative Example 2 | 0.71 | 445 | 0 | 87.5 | 80.2 |

As can be seen from the data in Table 1, when the surface of the carbon-based particles contains element sodium and/or element potassium, the lithium-ion battery can have high initial coulombic efficiency and excellent cycling performance. Furthermore, when the carbon-based material satisfies that the mass loss ratio S≥0.50% and the temperature range T where the mass loss peak is located is 300°C to 500°C, the initial coulombic efficiency and cycling performance of the lithium-ion battery can be significantly improved.

In Table 2, the influences of the mass ratio C1 of element carbon on the particle surface of the carbon-based material and the mass percentage C of the overall element carbon in the carbon-based material on the performance of the lithium-ion battery are further studied on the basis of Example 6. Adjusting the concentration of hydrogen peroxide solution could adjust the surface modification state of the carbon-based material, and change the percentage of the organic salt on the particle surface and the combination state with graphite.

**Table 2**

| Examples | S (%) | T (°C) | X (%) | C% | C1% | FTIR characteristic peak position $cm^{-1}$ | Initial coulombic efficiency FE of lithium-ion battery (%) | Capacity retention rate of lithium-ion battery (%) |
|---|---|---|---|---|---|---|---|---|
| Example 6 | 1.67 | 405 | 1.1 | 98.5 | 95.3 | 1230 | 92.5 | 91.6 |
| Example 16 | 1.60 | 396 | 1.0 | 99.4 | 95.5 | 1155 | 92.7 | 91.8 |
| Example 17 | 1.65 | 401 | 1.1 | 99.5 | 96.3 | 1134 | 92.8 | 91.8 |
| Example 18 | 1.87 | 415 | 1.2 | 98.5 | 97.3 | 1045 | 92.6 | 91.4 |
| Example 19 | 1.60 | 395 | 1.0 | 98.8 | 96.5 | 1023 | 92.7 | 91.3 |
| Example 20 | 1.55 | 385 | 1.0 | 99.4 | 93.2 | 925 | 92.7 | 92.0 |
| Example 21 | 1.40 | 367 | 0.9 | 99.5 | 90.6 | 934 | 92.7 | 92.0 |
| Example 22 | 1.50 | 376 | 1.0 | 99.6 | 91.2 | 1185 | 93.0 | 92.1 |
| Example 23 | 1.45 | 373 | 0.9 | 99.5 | 90.9 | 1079 | 93.1 | 92.2 |

As can be seen from the data in Table 2, when the negative electrode active material satisfies C≥98% and C1≤96%, the initial coulombic efficiency and cyclic capacity retention rate of the lithium-ion batteries are further improved on the basis of Example 6.

In Table 3, the influences of the initial coulombic efficiency CE, $D_V90$, and $D_V50$ of the carbon-based material on the performance of the lithium-ion batteries are further studied on the basis of Example 23. The initial coulombic efficiency and the change of particle size of the carbon-based material are realized by controlling the mass ratio of the organic salt and the particle size grinding process of raw petroleum coke.

**Table 3**

| Examples | S (%) | T (°C) | X (%) | Initial coulombic efficiency CE of carbon-based material % | $D_v90$ (μm) | $D_v50$ (μm) | $D_v90/D_v50$ | Initial coulombic efficiency FE of lithium-ion battery (%) | Capacity retention rate of lithium-ion battery (%) |
|---|---|---|---|---|---|---|---|---|---|
| Example 23 | 1.45 | 373 | 0.9 | 93.4 | 38.0 | 14.5 | 2.6 | 93.1 | 92.2 |
| Example 24 | 1.43 | 370 | 0.9 | 94.5 | 37.4 | 13.8 | 2.7 | 93.2 | 92.4 |
| Example 25 | 1.40 | 366 | 0.9 | 95.6 | 34.5 | 12.5 | 2.8 | 93.3 | 92.5 |
| Example 26 | 1.48 | 377 | 0.9 | 93.4 | 34.5 | 14.5 | 2.4 | 93.3 | 92.4 |
| Example 27 | 1.50 | 378 | 0.9 | 93.7 | 30.2 | 14.5 | 2.1 | 93.2 | 92.4 |
| Example 28 | 1.53 | 383 | 1.0 | 95.4 | 33.2 | 14.3 | 2.3 | 93.5 | 92.8 |
| Example 29 | 1.55 | 389 | 1.0 | 95.5 | 30.5 | 13.7 | 2.2 | 93.4 | 92.7 |

As can be seen from the data in Table 3, when the carbon-based material satisfies one of the conditions of initial coulombic efficiency CE≥93.0% and particle size $D_v90/D_v50 \leq 3.0$, the initial coulombic efficiency and cyclic capacity retention rate of the lithium-ion secondary battery are improved, and when the two conditions are satisfied, the initial coulombic efficiency and cyclic capacity retention rate are obviously improved.

In Table 4, the influences of the specific surface area BET, tap density TD, and powder OI value of the carbon-based material on the performance of the lithium-ion are further studied on the basis of Example 28.

**Table 4**

| Examples | BET ($m^2/g$) | TD ($g/cm^3$) | OI value | Initial coulombic efficiency FE of lithium-ion battery (%) | Capacity retention rate of lithium-ion battery (%) |
|---|---|---|---|---|---|
| Example 28 | 0.8 | 0.7 | 10.0 | 93.5 | 92.8 |
| Example 30 | 1.2 | 0.8 | 9.5 | 93.9 | 93.2 |
| Example 31 | 3.3 | 0.9 | 13.0 | 94.1 | 93.3 |
| Example 32 | 1.5 | 0.7 | 7.0 | 93.9 | 93.2 |
| Example 33 | 2.8 | 0.6 | 6.8 | 94.1 | 93.4 |
| Example 34 | 0.8 | 0.9 | 7.3 | 94.0 | 93.2 |
| Example 35 | 0.9 | 1.1 | 6.5 | 94.1 | 93.3 |
| Example 36 | 1.5 | 0.6 | 12.0 | 93.7 | 93.0 |
| Example 37 | 2.9 | 0.7 | 14.6 | 93.8 | 93.1 |
| Example 38 | 0.9 | 0.6 | 8.0 | 93.7 | 93.0 |

(continued)

| Examples | BET ($m^2/g$) | TD ($g/cm^3$) | OI value | Initial coulombic efficiency FE of lithium-ion battery (%) | Capacity retention rate of lithium-ion battery (%) |
|---|---|---|---|---|---|
| Example 39 | 5.5 | 0.7 | 5.8 | 93.9 | 93.2 |
| Example 40 | 0.8 | 1.1 | 9.6 | 93.8 | 93.0 |
| Example 41 | 0.9 | 1.2 | 12.5 | 93.8 | 93.1 |
| Example 42 | 1.8 | 1.0 | 6.6 | 94.4 | 93.7 |
| Example 43 | 2.6 | 1.2 | 5.3 | 94.3 | 93.6 |

As can be seen from the data in Table 4, compared with Example 28, when the carbon-based material satisfies one or two of the conditions of 0.5 $m^2/g \leq BET \leq 5.5\ m^2/g$, $TD \geq 0.6\ g/cm^3$, and $OI \leq 15$, the initial coulombic efficiency and cyclic capacity retention rate of the lithium-ion battery are improved, and when all conditions are satisfied, the initial coulombic efficiency and cyclic capacity retention rate of the lithium-ion battery are significantly improved.

In Table 5, the influences of the compacted density P and single-sided capacitance M per unit area of the negative electrode plate on the performance of the lithium-ion are further studied on the basis of Example 42.

**Table 5**

| Examples | P ($g/cm^3$) | M ($mAh/cm^2$) | Initial coulombic efficiency FE of lithium-ion battery (%) | Capacity retention rate of lithium-ion battery (%) |
|---|---|---|---|---|
| Example 42 | 1.75 | 3.8 | 94.4 | 93.7 |
| Example 44 | 1.70 | 1.6 | 94.6 | 93.9 |
| Example 45 | 1.72 | 2.5 | 94.7 | 94.1 |
| Example 46 | 1.45 | 1.4 | 94.8 | 94.2 |
| Example 47 | 1.55 | 3.7 | 94.7 | 94.1 |
| Example 48 | 1.70 | 1.3 | 94.5 | 93.8 |
| Example 49 | 1.72 | 3.9 | 94.4 | 93.7 |
| Example 50 | 1.35 | 1.5 | 95.1 | 94.5 |
| Example 51 | 1.50 | 2.6 | 95.3 | 94.6 |
| Example 52 | 1.65 | 3.3 | 95.2 | 94.5 |

As can be seen from the data in Table 5, compared with Example 42, when the negative electrode satisfies one of the conditions of 1.3 $g/cm^3 \leq P \leq 1.8\ g/cm^3$ and 1.0 $mAh/cm^2 \leq M \leq 4.0\ mAh/cm^2$, the initial coulombic efficiency and cyclic capacity retention rate of the lithium-ion battery are improved. When all conditions are satisfied, the initial coulombic efficiency and cyclic capacity retention rate of the lithium-ion battery are significantly improved.

Although illustrative embodiments have been demonstrated and described, persons skilled in the art should understand that the foregoing embodiments cannot be construed as limitations on this application, and that the embodiments may be changed, replaced, and modified without departing from the spirit, principle, and scope of this application.

## Claims

1. A negative electrode active material, comprising a carbon-based material, wherein a particle surface of the carbon-based material comprises an alkali metal element, and the alkali metal element comprises element sodium and/or element potassium.

2. The negative electrode active material according to claim 1, wherein under a thermogravimetric test, in a temperature range of 25°C to 800°C, a mass loss ratio of the carbon-based material is denoted as S, wherein $S \geq 0.5\%$, and an exothermic peak value of the carbon-based material is denoted as T, wherein $300°C \leq T \leq 500°C$.

**3.** The negative electrode active material according to claim 2, wherein 0.5%≤S≤5%; and/or 330°C≤T≤420°C.

**4.** The negative electrode active material according to claim 2, wherein 1%≤S≤3%.

**5.** The negative electrode active material according to claim 1, wherein the carbon-based material satisfies at least one of the following conditions (i) to (iii):

(i) an atomic percentage of alkali metal elements on the particle surface of the carbon-based material is denoted as X, wherein 0.4%≤X≤3.0%;
(ii) the particle surface of the carbon-based material further comprises element carbon, and a mass ratio of element carbon on the particle surface is denoted as C1, wherein C1≤96%; and
(iii) based on a mass of the carbon-based material, a mass percentage of element carbon in the carbon-based material is denoted as C, wherein C≥98%.

**6.** The negative electrode active material according to claim 5, wherein the carbon-based material satisfies at least one of the following conditions (iv) to (vi):

$$\text{(iv) } 0.6\% \leq X \leq 2.5\%;$$

$$\text{(v) } 90\% \leq C1 \leq 95\%;$$

and

$$\text{(vi) } 98.5\% \leq C \leq 99.9\%.$$

**7.** The negative electrode active material according to claim 1, wherein under a Fourier infrared test, the particle surface of the carbon-based material contains a substance having an absorption peak in the range of 950 $cm^{-1}$ to 1200 $cm^{-1}$; and/or

the particle surface of the carbon-based material contains a substance having at least one functional group of hydroxyl group, carboxyl group, carbonyl group, sulfonic acid group, phenyl group, carbon-carbon double bond, or carbon-carbon triple bond; and/or
the carbon-based material comprises graphite.

**8.** The negative electrode active material according to claim 1, wherein the carbon-based material satisfies at least one of the following conditions (vii) to (xi):

(vii) an initial coulombic efficiency CE of the carbon-based material satisfies CE≥93.0%;
(viii) a particle size of the carbon-based material satisfies $D_v90/Dv50 \leq 3.0$;
(ix) a specific surface area BET of the carbon-based material satisfies 0.5 $m^2/g \leq BET \leq 5.5$ $m^2/g$;
(x) a tap density TD of the carbon-based material satisfies TD≥0.6 $g/cm^3$; and
(xi) an OI value of the carbon-based material satisfies 4≤OI≤15.

**9.** The negative electrode active material according to claim 8, wherein the carbon-based material satisfies at least one of the following conditions (xii) to (xvi):

(xii) the initial coulombic efficiency CE of the carbon-based material satisfies CE>94.0%;
(viii) the particle size of the carbon-based material satisfies $D_v90/Dv50 \leq 2.5$;
(xiv) the specific surface area BET of the carbon-based material satisfies 1.5 $m^2/g \leq BET \leq 5$ $m^2/g$;
(xv) the tap density TD of the carbon-based material satisfies TD≥0.8 $g/cm^3$; and
(xvi) the OI value of the carbon-based material satisfies 5≤OI≤12.

**10.** The negative electrode active material according to claim 1, wherein the carbon-based material is prepared in the following steps:

S1: Provide a graphite composite material;

S2: Mix the graphite composite material with an oxidant, and perform an oxidation treatment to obtain an oxidized graphite composite material; and
S3: Mix the oxidized graphite composite material with an organic salt of an alkali metal element to obtain the carbon-based material.

**11.** A secondary battery, comprising a negative electrode; wherein the negative electrode comprises a negative electrode active material layer, and the negative electrode active material layer comprises the negative electrode active material according to any one of claims 1 to 10.

**12.** The secondary battery according to claim 11, wherein a compacted density P of the negative electrode satisfies 1.3 $g/cm^3 \leq P \leq 1.8\ g/cm^3$; and/or
a single-sided capacitance M per unit area of the negative electrode satisfies 1.0 $mAh/cm^2 \leq M \leq 4.0\ mAh/cm^2$.

**13.** The secondary battery according to claim 11, wherein a compacted density P of the negative electrode satisfies 1.33 $g/cm^3 \leq P \leq 1.68\ g/cm^3$; and/or
a single-sided capacitance M per unit area of the negative electrode satisfies 1.5 $mAh/cm^2 \leq M \leq 3.5\ mAh/cm^2$.

**14.** An electronic apparatus, comprising the secondary battery according to any one of claims 11 to 13.

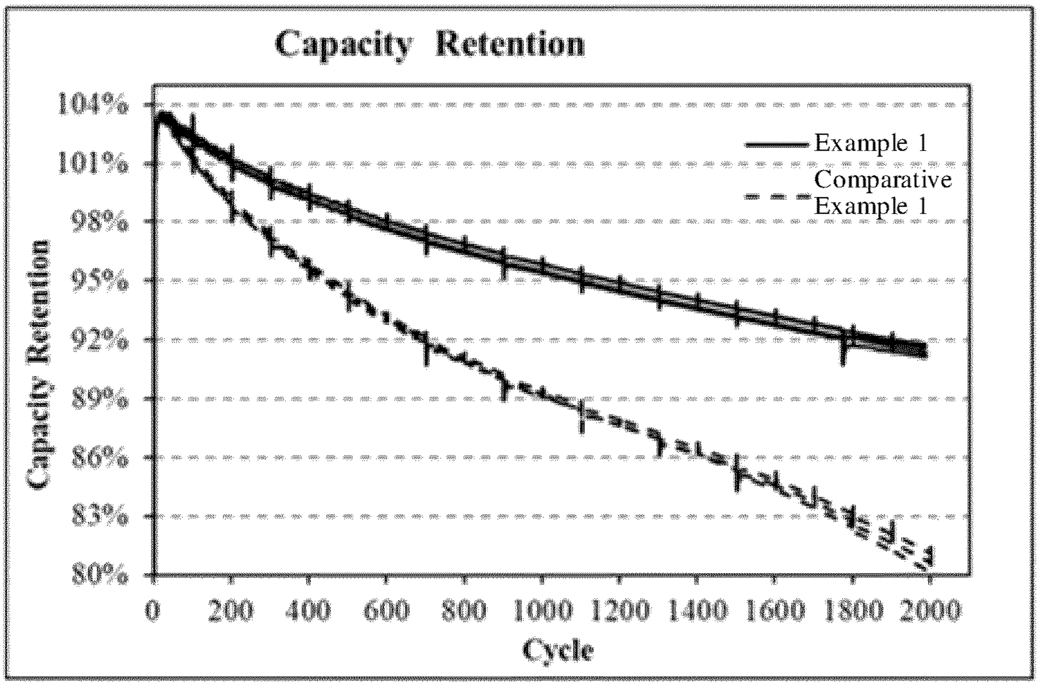
Capacity Retention
Capacity Retention
104%
101%
98%
95%
92%
89%
86%
83%
80%
Example 1
Comparative Example 1
0
200
400
600
800
1000
1200
1400
1600
1800
2000
Cycle

FIG. 1

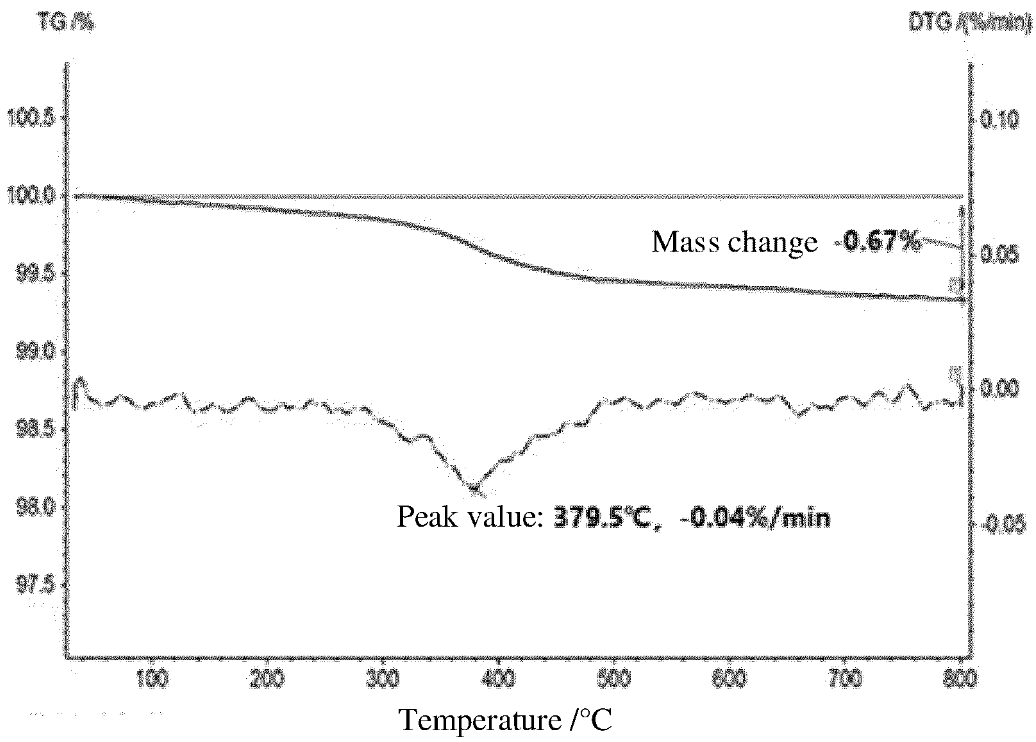
TG /%
DTG /(%/min)
100.5
100.0
99.5
99.0
98.5
98.0
97.5
0.10
0.05
0.00
-0.05
Mass change -0.67%
Peak value: 379.5°C, -0.04%/min
100
200
300
400
500
600
700
800
Temperature /°C

FIG. 2

## INTERNATIONAL SEARCH REPORT

International application No.
**PCT/CN2023/078733**

**A. CLASSIFICATION OF SUBJECT MATTER**

H01M4/587(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 负极, 阳极, 碳, 炭, 石墨, 包覆, 涂层, 涂膜, 核, 壳, 表面, 钠, 钾, batter+, cell?, anode?, negative, electrode?, carbon, graphite, coat+, core?, shell?, surface, sodium, potassium

**C. DOCUMENTS CONSIDERED TO BE RELEVANT**

| Category* | Citation of document, with indication, where appropriate, of the relevant passages | Relevant to claim No. |
|---|---|---|
| X | JP 2014146507 A (MITSUBISHI CHEMICAL CORP.) 14 August 2014 (2014-08-14) description, paragraphs 10-140 | 1-14 |
| X | CN 102804456 A (SUMITOMO CHEMICAL CO., LTD. et al.) 28 November 2012 (2012-11-28) description, paragraphs 4-30 | 1-14 |
| X | CN 115275206 A (DO-FLUORIDE NEW MATERIALS CO., LTD.) 01 November 2022 (2022-11-01) description, paragraphs 7-17 | 1, 11, 14 |
| A | CN 105990565 A (BYD CO., LTD.) 05 October 2016 (2016-10-05) entire document | 1-14 |

☐ Further documents are listed in the continuation of Box C.　　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 July 2023** | **12 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/078733**

| Patent document cited in search report | Publication date (day/month/year) | Patent family member(s) | Publication date (day/month/year) |
|---|---|---|---|
| JP 2014146507 A | 14 August 2014 | WO 2013122115 A1 | 22 August 2013 |
| | | CN 104106162 A | 15 October 2014 |
| | | KR 20140135697 A | 26 November 2014 |
| | | EP 2816642 A1 | 24 December 2014 |
| CN 102804456 A | 28 November 2012 | EP 2445037 A1 | 25 April 2012 |
| | | EP 2445037 A4 | 21 May 2014 |
| | | US 2012171571 A1 | 05 July 2012 |
| | | KR 20120028386 A | 22 March 2012 |
| | | TW 201108494 A | 01 March 2011 |
| | | WO 2010147225 A1 | 23 December 2010 |
| | | JP 2011023341 A | 03 February 2011 |
| | | JP 2011023342 A | 03 February 2011 |
| | | JP 2011023343 A | 03 February 2011 |
| | | JP 2011029160 A | 10 February 2011 |
| CN 115275206 A | 01 November 2022 | None | |
| CN 105990565 A | 05 October 2016 | None | |

Form PCT/ISA/210 (patent family annex) (July 2022)